Europäisches Patentamt

European Patent Office

Office européen des brevets

(11) Publication number: **0 110 273**
**B1**

(12) **EUROPEAN PATENT SPECIFICATION**

(45) Date of publication of patent specification: **02.09.87**

(51) Int. Cl.⁴: **B 60 K 15/06**

(21) Application number: **83111593.6**

(22) Date of filing: **21.11.83**

(54) Method of and apparatus for dispensing a liquid.

(30) Priority: **30.11.82 US 445458**
**31.03.83 US 480934**

(43) Date of publication of application:
**13.06.84 Bulletin 84/24**

(45) Publication of the grant of the patent:
**02.09.87 Bulletin 87/36**

(84) Designated Contracting States:
**DE FR GB IT NL SE**

(56) References cited:
**DE-A-2 715 142**
**GB-A- 794 125**

(73) Proprietor: **Flexcel International, Inc.**
**12596 W. Bayaud Street Suite 290**
**Lakewood, Colorado 80228 (US)**

(72) Inventor: **Curiel, Yoram**
**1956 S. Nome**
**Aurora Colorado 80014 (US)**

(74) Representative: **Howden, Christopher Andrew et al**
**FORRESTER & BOEHMERT Widenmayerstrasse 4/I**
**D-8000 München 22 (DE)**

Courier Press, Leamington Spa, England.

## Description

This invention relates to a method of and to apparatus for dispensing a liquid.

A variety of systems for remote delivery of liquids, such as fuel, water for drinking, bathing, cooking or other purposes, agricultural irrigation liquids and fire extinguishing materials are known. One common approach has been to employ a tanker truck having a rigid or flexible reservoir of the liquid and an associated power driven pump to dispense the same.

For refueling vehicles, it has generally been known to position the vehicle, to be refueled adjacent a stationary, permanently installed fuel reservoir and to employ a power energized (as by electrical motor or internal combusion engine) pump to transfer the fuel from the reservoir to the vehicle's fuel tank.

It is also known to mount such storage reservoirs on vehicles in order that a vehicle carrying the fuel reservoir may be removed to a vehicle to receive fuel and to employ power energized pumps to effect transfer of fuel from the reservoir.

In many situations, it is inefficient and, sometimes, dangerous to rely on such known approaches. For example when supplyng water or fuel to military vehicles, such as tanks, in combat zones. The need to rely on mobile fuel tanker trucks not only substantially increases the amount of time involved for refueling individual vehicles, but often means that only one or two vehicles can receive fuel from such a truck at one time. The need to refuel such vehicles sequentially increases the risks of loss of life and equipment. A further problem is the uncertainty of being able to drive such a tanker truck to the combat zone. A grouping of such vehicles may create an easy target for the enemy.

It is also known to use so-called "bladder" collapsible storage containers to deliver fuel which is to be transferred by means of a power energized pump. One of the advantages of this approach over the tanker trucks is the ability to put the container to other uses and the fact that a single vehicle can return a large number of empty bladders to a refueling centre.

It is also known to employ a "fuel cell" which, by means of a portable power pump and skilled personnel, can be used to deliver fuel to military vehicles. One of the advantages of such fuel cells is that they are small enough to be delivered by helicopter to a desired location. However, fuel cells require a power pump and special packaging.

A further problem with systems requiring a power pump is that pumps are liable to break down at a critical time.

Yet another problem exists in connection with the need to refuel or provide a supply of water or other liquids at sites of major disasters, such as earthquakes, floods and severe storms, for example. In such circumstances electricity for operation of pumps may be unavailable and access roads may be blocked or severely damaged.

DE—A—2715142 discloses a collapsible storage reservoir for liquid fuel, for a military tank, the reservoir being accommodated in a recess in the tank body and being arranged to be compressed, to expel fuel therefrom into the tank as required, by the combined action of a pivoted flap or door of said recess, which is spring-biased to a closed position against the reservoir, and a spring-tensioned retaining element which extends around the reservoir and also acts to pull the reservoir wall inwardly into the recess.

In spite of the previously known systems for refueling vehicles at remote locations, such as in a military combat zone, and other systems for remote delivery of liquids there remains the need for an improved method and associated reservoir. Thus, for example, because the collapsible reservoir of DE—A—2715142 and the recess and associated flap and tensioning element must be provided on, and accommodated by the tank, the additional fuel storage capacity provided thereby is small.

Accordingly, in one aspect the invention provides a method of dispensing a liquid comprising providing a liquid containing resilient storage reservoir having an outlet opening, and compressing said reservoir by means of a part of a vehicle to urge liquid out of the reservoir, characterised by positioning said reservoir in a path of traction means of the vehicle; and so moving said vehicle as to cause said traction means to run over at least a portion of said reservoir to compress said reservoir.

In a second aspect, the invention provides a collapsible liquid storage reservoir comprising a unitary resilient body member composed of a resiliently compressible material, the reservoir being suitable for use in the method according to the first-noted aspect, and the reservoir has a tapered portion and has an elongate portion adjacent said tapered portion.

The reservoir preferably has a ground engaging surface, and a tapered portion at one end to facilitate engagement by the vehicle traction means. In one embodiment, the exterior of the reservoir body has a generally cylindrical exterior configuration with a tapered portion being of generally conical shape. In another embodiment, the lower surface may be substantially flat, the upper surface may have a portion which is substantially flat and generally parallel to the lower surface and have an adjacent top portion which is substantially flat which extends angularly downwardly. When used for refueling a vehicle, the reservoir outlet is connected to the fuel inlet of such vehicle.

In general, it is preferably to place the outlet means at the opposite end of an elongated reservoir with respect to the tapered portion which is disposed at or adjacent one end thereof. Tread means may be provided on the upper surface to facilitate the frictional engagement of the traction means with the upper surface. Tread means may also be provided on the ground engaging portions. Externally provided reservoir engaging means may be secured to the exterior of the reservoir to facilitate handling of the same.

Embodiments of the invention have been found to provide an improved efficient means of delivering liquids by means of a vehicle, and to provide an efficient and rapid method of refueling vehicles at a remote location. The use of tanker trucks, power operated pump means and skilled personnel are not required for carrying out the method of the invention.

In order that the invention may be more readily understood, and so that further features thereof may be appreciated, embodiments of the invention will now be described, by way of example, with reference to the accompanying drawings, in which:

FIGURE 1 is a front elevational view of a liquid storage reservoir of the present invention;

FIGURE 2 is a right side elevational view of the liquid storage reservoir of Figure 1;

FIGURE 3 is a left side elevational view of the liquid storage reservoir of Figure 1;

FIGURE 4 is a top plan view of the liquid storage reservoir of Figure 1;

FIGURE 5 is a bottom plan view of the liquid storage reservoir of Figure 1;

FIGURE 6 is a cross-sectional illustration of the liquid storage reservoir of Figure 1 taken through the line 6—6 of Figure 1;

FIGURE 7 is a fragmentary cross-sectional view of a portion of the wall of a liquid storage reservoir of the invention;

FIGURE 8 illustrates a vehicle in the process of refueling using a fuel storage reservoir of the present invention;

FIGURE 9 is a front elevational view of another embodiment of liquid storage of the invention;

FIGURE 10 is a right side elevational view of the reservoir of Figure 9;

FIGURE 11 is a left side elevational view of the reservoir of Figure 9;

FIGURE 12 is a fragmentary cross-sectional illustration of a portion of a modified reservoir wall; and

FIGURE 13 is a fragmentary portion of the reservoir wall of Figure 12.

As used herein the term "traction means" refers to the ground engaging means of a vehicle which permits the vehicle to move along the ground and is intended to include, but not be limited to, wheels, tires, endless tread belts and other such members.

As used herein the term "ground" is intended to refer broadly to the surface supporting a vehicle be it earth, gravel, paved roads or any other surface on which liquid delivery is to be achieved.

As used herein "fire extinguishing material" refers to a liquid, slurry or foam, with or without flame retarding additives and shall expressly include water.

While for clarity of description specific reference will be made to use of the invention in connection with a preferred use in the dispensing of fuels, other uses including, but not limited to, use in connection with dispensing drinking and bathing water, plant irrigation and fire extinguishing material, for example, will be equally advantageous.

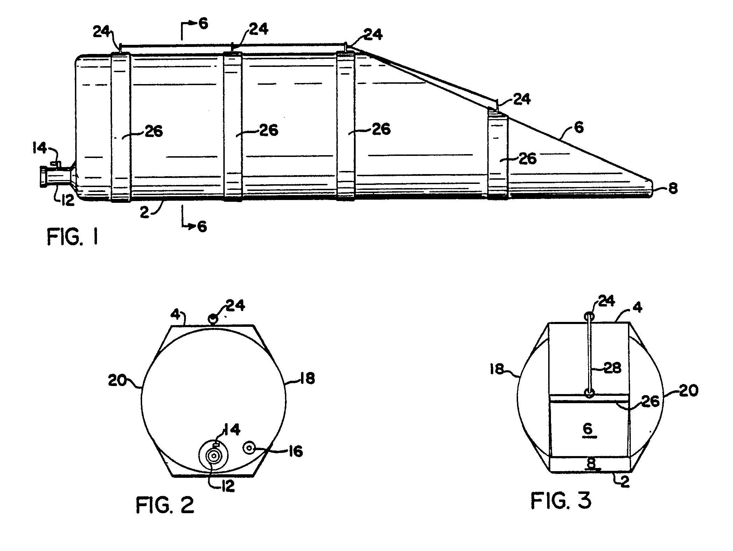

As illustrated in Figures 1 and 3, a reservoir member comprises an elongate body. The reservoir has a substantially flat ground engaging surface 2, an upper wall portion 4, which is also substantially flat and is oriented generally parallel with respect to the ground engaging surface 2, an adjacent upper wall surface 6, which is oriented generally angularly downwardly toward a first end wall 8, and side walls 18, 20, which, in the form shown, bulge outwardly and present a generally circular internal section.

A second end wall 10 is provided at the end opposite the end wall 8. An outlet 12 is secured within the end wall 10 and has a valve which is operated by a valve control element 14. The valve control element 14 may advantageously be manually rotatable to open and close the valve. A pressure relief member 16, which may consist of a plug which is adapted to pop out if pressure inside the reservoir exceeds a pre-set valve is also provided in the end wall 10. At safe pressures (i.e. pressures below the preset valve) the member 16 resists the flow of fluid therethrough.

A suitable vent (not shown) is provided to permit any air contained within the reservoir to be exhausted and replaced by fuel, such as gasoline or diesel fuel, or other liquid, during filling of the reservoir. For example there may be a vented connection in the outlet 12 or a separate opening in the reservoir.

In order to facilitate ease of handling, it is desirable to provide the reservoir with external means which may be gripped manually or by suitable lifting equipment, such as a crane, fork lift or hoist. In the embodiment shown a series of strap members 26 are secured circumferentially about the exterior of the reservoir and present a series of loop members 24 projecting upwardly therefrom. A suitable wire or other member is passed through the loops and secured to the end loops 24 and is adapted to be engaged for lifting of the reservoir.

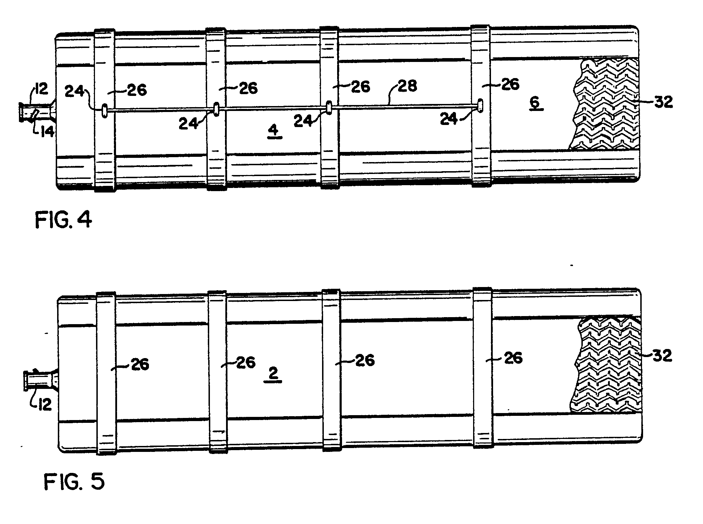

Figure 4 and 5 show, respectively, top plan and bottom plan views of the compressible reservoir of Figures 1 through 7.

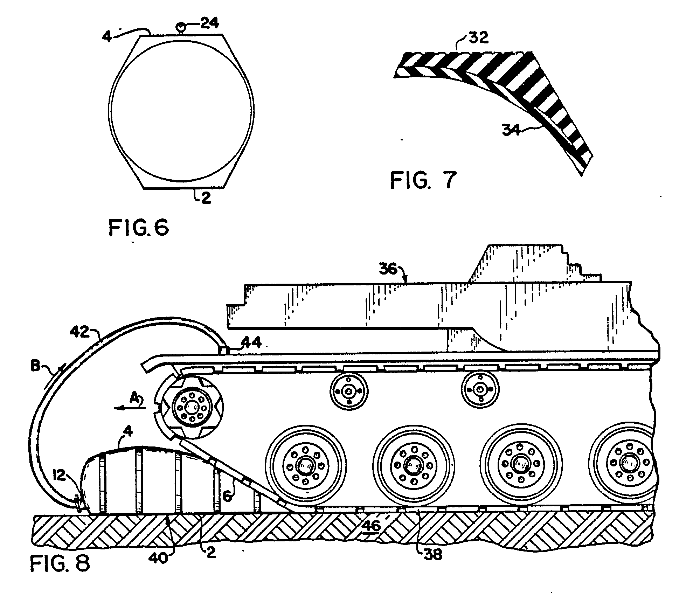

Referring now to Figures 6 and 7, one preferred construction of the reservoir will now be considered. Preferably, the reservoir is constructed from a resiliently compressible material, such as a neoprene rubber. If necessary an inner lining material which is inert with respect to the liquid to be contained within the reservoir may also be provided. In the embodiment of Figures 1 to 7, a rubber bladder 34 is provided as the interior lining. Additionally, external treads 32 may be provided on the upper surfaces of the reservoir in order to maximize traction efficiency between the vehicle traction means and the reservoir. If desired, the walls of the reservoir may be reinforced for example, by use of metal fibers or synthetic fibers. Also, if desired, treads 32, may be provided on the ground engaging surface 2 in order to improve the frictional resistance of the reservoir to undesired movement of the reservoir along the ground.

An exemplary reservoir of the present invention may advantageously have a diameter of approximately 2.5 feet (75 cm) measured across the sidewalls and a length of about 8 to 10 feet (2.4 to 3.1 m). Preferred capacity of the reservoir is from about 10 to 200 gallons (45 to 910 litres) of liquid. For sizes under about 25 gallons (115 litres) a generally cylindrical reservoir may be preferred.

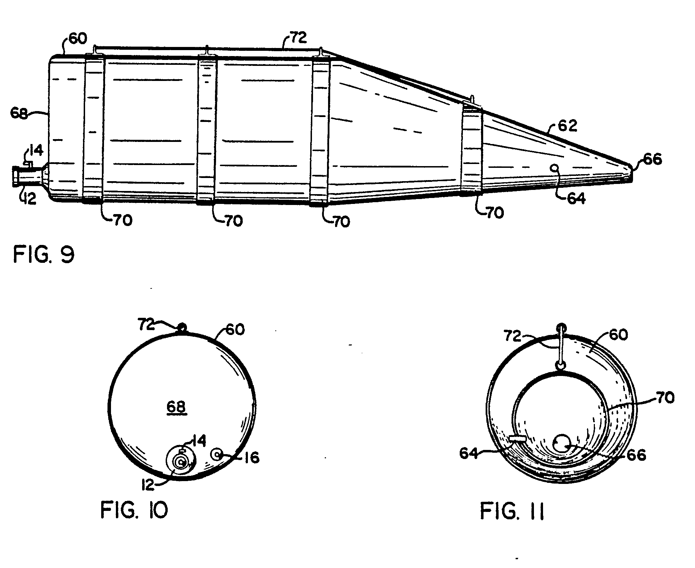

Figure 8, illustrates a vehicle, in the form of a military tank 36, which is disposed with its traction means 38, in the form of an endless tread member, in contacting overlying relationship with the tapered portion defined by the downwardly angularly sloping portion 6 of the upper wall and a portion of the ground engaging surface 2. A filler tube 42, which may advantageously be about 2 to 3 inches (50—75 mm) in diameter, is secured at one end to the reservoir outlet 12 and at its other end to a fuel inlet 44 of the tank 36. As the tank advances (toward the left of Figure 8 as indicated by arrow A), it moves onto the upper surface 4, 6 of the reservoir whereby a compressive force is exerted on the reservoir, between the tank tread member 38 and the ground 46 to initiate flow of fuel in to the tube 42 in a direction indicated by arrow B. The rate of advance of the tank is preferably such as to create a desired rate of flow. When transfer of fuel has been completed, the tube 22 is removed from the fuel inlet 44 and disconnected from outlet means 12. The outlet 12 may be provided with a closure (not shown) such as a threaded closure to close the outlet 12 and permit the reservoir to be returned to a filling station.

Figures 9, 10 and 11, show a modified form of reservoir. This embodiment has an elongate body provided with a generally cylindrically shaped exterior portion 60 and an adjacent conical portion 62. The conical portion 62 provides a tapered section to facilitate engagement with traction means of a vehicle as described above. Straps 70 secure a line 72 to the reservoir through a series of loop members. The conical portion 62 terminates at a circular end wall 66 and the cylindrical portion terminates at a circular end wall 68, the end walls 66, 68 being at opposite ends of the reservoir. An advantage of this embodiment is that it may be moved easily by rolling it along the ground, or off a vehicle, about the reservoir's longitudinal axis. Another feature of this embodiment, which may be used in other embodiments as well, is an inlet valve 64 which may be connected to a source of compressed air (not shown), such as a pressurized container to assist with discharge of liquid in the event the vehicles to be refueled is unable to move. Treads, similar to the treads 32 of the embodiment of Figures 1 to 7 may be provided about the surface of the reservoir to improve traction.

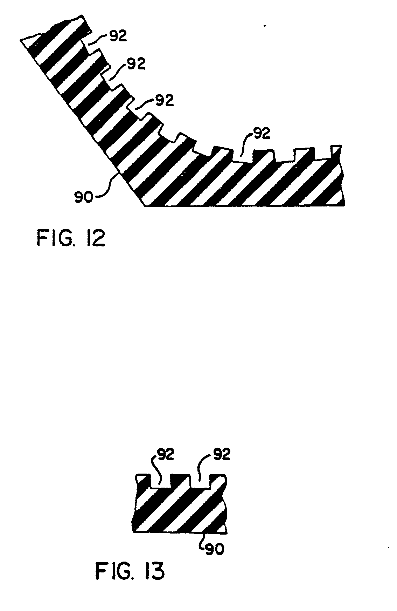

In some instances undesirable small quantities of water may become mixed with fuel, either prior to introduction into the reservoir or through condensation within the reservoir. If desired, a filter which permits passage of fuel but not water therethrough may be provided in the outlet region. Alternatively, or in addition thereto, as is illustrated in Figures 12 and 13 the reservoir wall 90 may be provided with a plurality of inwardly open recesses 92. As water is heavier than fuel, the water will tend to accumulate within the recesses 92 and, therefore, be less likely to be urged out of the reservoir during compression or pumping action. The recesses 92 are preferably substantially longitudinally oriented with respect to the reservoir and extend over a major portion of the length of the reservoir. In the embodiments of Figures 1 to 8, the recesses may be formed only in the lower wall portions and in the embodiments of Figures 9 to 11 the recesses may be formed about the circumference of the reservoir.

It will be appreciated while the present invention has been illustrated in its preferred forms having either a generally flat lower surface, a generally flat upper surface parallel to the lower surface and an angularly downwardly directed surface to facilitate engagement with the vehicle traction means or a cylindrical surface cooperating with a conical surface, other configurations for the reservoir will be apparent to those skilled in the art.

The present invention has been found to provide a simple and efficient method of rapidly dispensing liquid, for example for refuelling military or non-military vehicles in a remote location without requiring the use of tanker trucks, power operated pumps, or skilled personnel.

The reservoir may be delivered to the site of liquid transfer by any of various means including by trucks and other land vehicles, helicopters and other air vehicles, from which they may be parachuted to a desired location, and may also be transported by boat either stowed on the boat or by being towed as in a group of floating liquid containing reservoirs which have been suitably secured to each other or to the boat.

It will be appreciated that when two materials are to be kept apart prior to dispensing they may be provided in separate reservoirs of the invention or in a divided reservoir with a suitable mixing nozzle so as to maintain separation prior to use. An example of such use would be ingredients employed to create a fire retarding or extinguishing foam.

The features disclosed in the foregoing description, in the following claims and/or in the accompanying drawings may, both separately and in any combination thereof, be material for realising the invention in diverse form thereof.

**Claims**

1. A method of dispensing a liquid comprising providing a liquid containing resilient storage reservoir having an outlet opening (12) and compressing said reservoir by means of a part of a vehicle (36) to urge liquid out of the reservoir, characterised by positioning said reservoir in a path of traction means (38) of the vehicle; and so moving said vehicle as to cause said traction means to run over at least a portion of said reservoir to compress said reservoir.

2. A method according to claim 1, wherein said resilient reservoir is a fuel storage reservoir, and prior to urging fuel out of said reservoir, said resilient storage reservoir is connected with a fuel inlet (44) of a vehicle.

3. A method according to claim 2, wherein a filler tube (42) connects said reservoir to said vehicle, whereby fuel urged out of said reservoir will travel through said filler tube into said vehicle.

4. A method according to claim 1, wherein said liquid is a fire extinguishing material.

5. A method according to any one of claims 1 to 4, wherein said reservoir has an elongated body having an enlarged portion and an adjacent tapered portion, and said traction means (38) is caused to engage said tapered portion before engaging said enlarged portion.

6. A method according to claim 5, wherein said enlarged portion (60) of the reservoir is substantially cylindrical and said tapered portion (62) is substantially conical, and at least a portion of said enlarged portion is positioned to be in contact with the ground prior to dispensing.

7. A method according to any one of claims 1 to 5, wherein said reservoir has a substantially flat lower surface (2), for positioning in contact with the ground prior to dispensing.

8. A method according to claim 7, wherein said reservoir has an upper surface (6) having at least a portion which is angularly downwardly oriented, and wherein said angularly downwardly portion is placed at the end of said reservoir first contacted by said vehicle traction means.

9. A method according to any one of claims 1 to 8, wherein said vehicle has traction means (38) in the form of endless tread means, and one of said endless tread means is caused to run over said storage reservoir to dispense the liquid.

10. A method according to any one of claims 1 to 9, wherein the speed of movement of said vehicle over the reservoir is controlled to achieve a desired rate of flow into said vehicle.

11. A method according to any one of claims 1 to 10, wherein valve means (14, 16) are operatively associated with outlet means (12) of the reservoir, selectively to restrict or to permit flow of fuel out of said reservoir.

12. A method according to any one of claims 1 to 11, wherein lifting means (24, 26) are secured to the exterior of said reservoir, for lifting and positioning said reservoir.

13. A collapsible liquid storage reservoir comprising a unitary resilient body member composed of a resiliently compressible material, characterised in that the reservoir is suitable for use in the method of claim 1, has a tapered portion (62) and has an elongate portion (60) adjacent said tapered portion.

14. A storage reservoir according to claim 13, wherein said elongate portion (60) is generally cylindrical and said tapered portion (62) is generally conical.

15. A storage reservoir according to claim 13, wherein said elongate portion has a generally flat ground engaging lower surface (2), and said tapered portion has a portion (6) extending generally angularly downwardly.

16. A storage reservoir according to any one of claims 12 to 15, wherein at least a portion of said reservoir has tread means (32) to facilitate more efficient engagement by traction means (38) of a vehicle.

17. A storage reservoir according to any one of claims 13 to 16, wherein said storage reservoir is elongate and has an outlet (12) disposed adjacent one end thereof.

18. A storage reservoir according to claim 17, wherein said tapered portion (62) is disposed at or adjacent the end opposite of said outlet end (12).

19. A storage reservoir according to any one of claims 13 to 18, wherein reservoir engaging means are provided on the exterior thereof.

20. A storage reservoir according to claim 19, wherein said reservoir engaging means includes an elongate member secured, at least in part in spaced relationship with respect to the exterior surface of said reservoir.

21. A storage reservoir according to claim 17, or any claim dependent thereon, wherein valve means (14, 16) are operatively associated with said outlet (12).

22. A storage reservoir according to claim 15, or any claim dependent thereon, wherein said reservoir has an upper surface portion (4) adjacent to said angularly downwardly extending portion (6) and being substantially parallel to said lower surface (2).

23. A storage reservoir according to any one of claims 13 to 22, wherein said reservoir has a storage capacity of from 10 to 200 gallons (45 to 910 litres).

24. A storage reservoir according to claim 17, or any claim dependent thereon, wherein outlet tube means (42) may be secured to said reservoir outlet (12) for directing the flow of said liquid urged out of said reservoir.

25. A storage reservoir according to any one of claims 13 to 24 wherein second valve means (64) are operatively associated with said reservoir for permitting introduction of compressed air to the reservoir.

26. A storage reservoir according to any one of claims 13 to 25, wherein a plurality of inwardly open channels (92) are formed within the wall of said reservoir.

27. A storage reservoir according to claim 26, wherein said channels are oriented generally longitudinally within said reservoir.

**Patentansprüche**

1. Verfahren zum Austeilen einer Flüssigkeit aufweisend die Schritte, Bereitstellen eines nachgiebigen Flüssigkeitsvorratsbehältnisses mit einer Auslaßöffnung (12) und Komprimieren dieses Behältnisses mit Hilfe eines Teiles eines Fahrzeuges (36), um Flüssigkeit aus dem Behältnis herauszuzwingen, dadurch gekennzeichnet, daß das Behältnis in dem Weg von Traktionselementen (38) des Fahrzeuges positioniert wird; und daß das Fahrzeug so bewegt wird, daß die Traktionselemente über zumindest einen Teil des Reservoirs laufen, um das Reservoir zu komprimieren.

2. Verfahren nach Anspruch 1, wobei das nachgiebige Behältnis ein Kraftstoffvorratsbehältnis ist und das nachgiebige Vorratsbehältnis, bevor Kraftstoff aus dem Behältnis herausgezwungen wird, mit einem Kraftstoffeinlaß (44) des Fahrzeuges verbunden wird.

3. Verfahren nach Anspruch 2, wobei eine Füllröhre (42) das Behältnis mit dem Fahrzeug verbindet, wodurch Kraftstoff, welcher aus dem Behältnis herausgezwungen wird, durch die Füllröhre in das Fahrzeug läuft.

4. Verfahren nach Anspruch 1, wobei die Flüssigkeit ein Fueerlöschmedium ist.

5. Verfahren nach einem der Ansprüche 1 bis 4, wobei das Behältnis einen langgestreckten Körper aufweist, welcher einen vergrößerten Bereich und einen angrenzenden verjüngten Bereich besitzt und die Traktionselemente (38) dazu gebracht werden, den verjüngten Bereich zu erfassen bevor der vergrößerte Bereich erfasst wird.

6. Verfahren nach Anspruch 5, wobei der vergrößerte Bereich (60) des Behältnisses im wesentlichen ·zylindrisch ist und der verjüngte Bereich (62) im wesentlich konisch ist und zumindest ein Teil des vergrößerten Bereiches so positioniert wird, daß er in Kontakt mit dem Boden ist vor dem Austeilen.

7. Verfahren nach einem der Ansprüche 1 bis 5, wobei das Behältnis eine im wesentlichen Flache untere Fläche (2) besitzt, für eine Positionierung in Kontakt mit dem Untergrund vor dem Austeilen.

8. Verfahren nach Anspruch 7, wobei das Reservoir eine obere Fläche (6) besitzt, welche zumindest einen Bereich hat, welcher winkelmäßig nach unten gerichtet ist, und wobei der winkelmäßig nach unten gerichtete Bereich an dem Ende des Behältnisses angeordnet ist, welches zuerst durch die Traktionselement des Fahrzeuges berührt wird.

9. Verfahren nach einem der Ansprüche 1 bis 8, wobei das Fahrzeug Traktionselemente (38) in Form von endlosen Laufflächenelementen besitzt und eines dieser Laufflächenelemente gezwungen wird, über das Vorratsbehältnis zu laufen, um die Flüssigkeit auszuteilen.

10. Verfahren nach einem der Ansprüche 1 bis 9, wobei die Bewegungsgeschwindigkeit des Fahrzeuges über das Behältnis gesteuert wird, um eine erwünschte Strömungsrate in das Fahrzeug zu erhalten.

11. Verfahren nach einem der Ansprüche 1 bis 10, wobei Ventilelemente (14, 16) betrieblich den Auslaßelementen (12) des Behältnisses zugeordnet sind, um auswählbar eine Strömung von Kraftstoff aus oder in dem Behältnis zu unterbinden oder zu ermöglichen.

12. Verfahren nach einem der Ansprüche 1 bis 11, wobei Anhebeelemente (24, 26) an dem Äußeren des Behältnisses gesichert sind, um das Behältnis anzuheben und zu positionieren.

13. Zusammenlegbares flüssiges Vorratsbehältnis aufweisend ein nachgiebiges einstückiges Körperteil bestehend aus nachgiebigem kompressiblem Werkstoff, dadurch gekennzeichnet, daß das Behältnis geeignet ist für eine Verwendung im Verfahren nach Anspruch 1 und einen verjüngten Bereich (62) und einen langegestreckten Bereich (60) besitzt, angrenzend an den verjüngten Bereich.

14. Vorratsbehältnis nach Anspruch 13, wobei der langgestreckte Bereich (60) im wesentlichen zylindrisch ist und der verjüngte Bereich (62) im wesentlichen konisch ist.

15. Vorratsbehältnis nach Anspruch 13, wobei der langgestreckte Bereich einen im wesentlichen flachen Grundteil besitzt, zusammenwirkend mit der unteren Fläche (2) und wobei der verjüngte Bereich einen Bereich (6) besitzt, der sich im wesentlichen winkelmäßig nach unten erstreckt.

16. Vorratsbehältnis nach einem der Ansprüche 12 bis 15, wobei zumindest ein Bereich des Behältnisses Laufflächenelemente (32) besitzt, um wirkungsvoller eine Erfassung durch die Traktionselemente (38) des Fahrzeuges zu ermöglichen.

17. Aufbewahrungsbehältnis nach einem der Ansprüche 13 bis 16, wobei das Aufbewahrungsbehältnis langgestreckt ist und einen Auslaß (12) besitzt, angeordnet angrenzend einem Ende desselben.

18. Aufbewahrungsbehältnis nach Anspruch 17, wobei der verjüngte Bereich (62) an oder angrenzend dem Ende gegenüber dem Auslaßende (12) angeordnet ist.

19. Aufbewahrungsbehältnis nach einem der Ansprüche 13 bis 18, wobei das Behältnis Erfassungselemente besitzt, die an seinem Äußeren vorgesehen sind.

20. Aufbewahrungsbehältnis nach Anspruch 19, wobei das Behältnis Erfassungselemente besitzt einschließlich eines langgestreckten Elementes, gesichert und zumindest teilweise in beabstandeter Beziehung mit Bezug zu der äußeren Fläche des Behältnisses.

21. Aufbewahrungsbehältnis nach Anspruch 17 oder einem der von diesem abhängigen Ansprüche, wobei Ventilelemente (14, 16) betrieblich dem Auslaß (12) zugeordnet sind.

22. Aufbewahrungsbehältnis nach Anspruch 15 oder einem von diesem abhängigen Anspruch, wobei das Behältnis einen oberen Flächenbereich (4) angrenzend an den winkelmäßig sich nach unten erstreckenden Bereich (6) besitzt und im wesentlichen parallel zu der unteren Fläche (2) ist.

23. Aufbewahrungsbehältnis nach einem der Ansprüche 13 bis 22, wobei das Behältnis eine Aufbewahrungskapazität von 10 bis 200 Gallonen (45 bis 910 Litern) besitzt.

24. Aufbewahrungsbehältnis nach Anspruch 17 oder einem von diesem abhängigen Anspruch, wobei Auslaßröhrenelemente (42) an dem Behältnisauslaß (12) gesichert sein können, um eine Flüssigkeitsströmung zu leiten, die aus dem Behältnis herausgezwungen ist.

25. Aufbewahrungsbehältnis nach einem der Ansprüche 13 bis 24, wobei zweite Ventilelemente (64) betrieblich dem Behältnis zugeordnet sind, um die Einführung von komprimierter Luft in das Behältnis zu ermöglichen.

26. Aufbewahrungsbehältnis nach einem der Ansprüche 13 bis 25, wobei eine Mehrzahl von nach innen offenen Kanälen (92) in der Wand des Behältnisses ausgebildet sind.

27. Aufbewahrungsbehältnis nach Anspruch 26, wobei die Kanäle im wesentlichen längs in dem Behältnis ausgerichtet sind.

**Revendications**

1. Procédé pour délivrer un liquide, comprenant les étapes qui consistent à se procurer un réservoir de stockage élastique contenant un liquide et comportant une ouverture de sortie (12), et à comprimer le réservoir au moyen d'une partie d'une véhicule (36) pour pousser le liquide hors du réservoir, caractérisé en ce que l'on positionne le réservoir sur le trajet de moyens de traction (38) du véhicule, et en ce que l'on déplace le véhicule de façon à faire passer les moyens de traction sur au moins une partie du réservoir pour comprimer le réservoir.

2. Procédé conforme à la revendication 1, dans lequel le réservoir élastique est un reservoir de stockage de carburant, et en ce que, avant de pousser le carburant hors du réservoir, on relie le réservoir de stockage élastique à une entrée de carburant (44) d'un véhicule.

3. Procédé conforme à la revendication 2, dans lequel un tube de remplissage (42) relie le réservoir au véhicule, de sorte que du carburant poussé hors du réservoir va traverser le tube de remplissage et pénétrer dans le véhicule.

4. Procédé conforme à la revendication 1, dans lequel le liquide est un matériau d'extinction de feu.

5. Procédé conforme à l'une quelconque des revendications 1 à 4, dans lequel le réservoir comporte un corps allongé comprenant une partie agrandie et une partie adjacente en pointe, et dans lequel on fait en sorte que les moyens de traction (38) attaquent la partie en pointe avant d'attaquer la partie agrandie.

6. Procédé conforme à la revendication 5, dans lequel la partie agrandie (60) du réservoir est sensiblement cylindrique et la partie en pointe (62) est sensiblement conique, et dans lequel au moins une partie de la partie agrandie est mise en contact avec le sol avant de délivrer le liquide.

7. Procédé conforme à l'une quelconque des revendications 1 à 5, dans lequel le réservoir comporte une surface inférieure (2) sensiblement plate destinée à être mise en contact avec le sol avant de délivrer le liquide.

8. Procédé conforme à la revendication 7, dans lequel le réservoir comporte une surface supérieure (6) dont au moins un partie est orientée vers le bas selon un angle et dans lequel la partie orientée vers le bas selon un angle est placée à l'extrémité du réservoir qui est la première à être touchée par les moyens de traction du véhicule.

9. Procédé conforme à l'une quelconque des revendications 1 à 8, dans lequel le véhicule comporte des moyens de traction (38) en forme de moyens formant bandes de roulement sans fin, et dans lequel on fait passer l'un des moyens formant bande de roulement sans fin sur le réservoir de stockage pour délivrer le liquide.

10. Procédé conforme à l'une quelconque des revendications 1 à 9, dans lequel la vitesse de déplacement du véhicule sur le réservoir est réglée pour obtenir un débit désiré dans le véhicule.

11. Procédé conforme à l'une quelconque des revendications 1 à 10, dans lequel des moyens à usage de vanne (14, 16) sont fonctionnellement associés aux moyens de sortie (12) du réservoir pour, sélectivement, limiter ou permettre l'écoulement de carburant hors du réservoir.

12. Procédé conforme à l'une quelconque des revendications 1 à 11, dans lequel des moyens de levage (24, 26) sont fixés à l'extérieur du réservoir pour permettre de lever et positionner le réservoir.

13. Réservoir de stockage de liquide susceptible de s'aplatir, comprenant un élément formant corps élastique d'une seule pièce réalisé en un matériau compressible élastiquement, caractérisé en ce que le réservoir est adapté à être utilisé dans le procédé de la revendication 1, comporte une partie en pointe (62) et une partie allongée (60) adjacente à la partie en pointe.

14. Réservoir de stockage conforme à la revendication 13, dans lequel la partie allongée (60) est, d'une manière générale, cylindrique et dans lequel la partie en pointe (62) est, d'une manière générale, conique.

15. Réservoir de stockage conforme à la revendication 13, dans lequel la partie allongée comporte une surface inférieure en contact avec le sol (2) qui est, d'une manière générale, plate, et dans lequel la partie en pointe comporte une partie (6) qui s'étend d'une manière générale vers le bas et selon une angle.

16. Réservoir de stockage conforme à l'une quelconque des revendications 13 à 15, dans lequel au moins une partie du réservoir comprend des moyens formant bande de roulement (32) pour faciliter une attaque plus efficace des moyens de traction (38) d'un véhicule.

17. Réservoir de stockage conforme à l'une quelconque des revendications 13 à 16, dans lequel le réservoir de stockage est allongée et comporte une sortie (12) disposée au voisinage d'une extrémité du réservoir.

18. Réservoir de stockage conforme à la revendication 17, dans lequel la partie en pointe (62) est disposée à ou au voisinage de l'extrémité opposée à l'extrémité de sortie (12).

19. Réservoir de stockage conforme à l'une quelconque des revendications 13 à 18, dans lequel des moyens pour saisir le réservoir sont prévus à l'extérieur de celui-ci.

20. Réservoir de stockage conforme à la revendication 19, dans lequel les moyens pour saisir le réservoir comprennent un élément allongé fixé au moins en partie à distance de la surface extérieure du réservoir.

21. Réservoir de stockage conforme à la revendication 17 ou à l'une quelconque des revendications dépendant de celle-ci, dans lequel des moyens à usage de vanne (14, 16) sont fonctionnellement associés à la sortie (12).

22. Réservoir de stockage conforme à la revendication 15 ou à l'une quelconque des revendications dépendant de celle-ci, dans lequel le réservoir comporte une partie de surface supérieure (4) qui est adjacente à la partie s'étendant vers le bas et selon un angle (6) et est sensiblement parallèle à la surface inférieure (2).

23. Réservoir de stockage conforme à l'une quelconque des revendications 13 à 22, dans lequel le réservoir a une capacité de stockage de 10 à 200 gallons (45 à 910 litres).

24. Réservoir de stockage conforme à la revendication 17 ou à l'une quelconque des revendications dépendant de celle-ci, dans lequel des moyens formant tube de sortie (42) peuvent être fixés à la sortie (12) du réservoir pour diriger l'écoulement du liquide poussé hors du réservoir.

25. Réservoir de stockage conforme à l'une quelconque des revendications 13 à 24, dans lequel des seconds moyens à usage de vanne (64) sont associés fonctionnellement au réservoir pour permettre l'introduction d'air comprimé dans le réservoir.

26. Réservoir de stockage conforme à l'une quelconque des revendications 13 à 25, dans lequel plusieurs rainures ouvertes vers l'intérieur (92) sont ménagées dans la paroi du réservoir.

27. Réservoir de stockage conforme à la revendication 26, dans lequel les rainures sont orientées d'une manière générale longitudinalement à l'intérieur du réservoir.

FIG. 1

FIG. 2

FIG. 3

1

FIG. 4

FIG. 5

FIG.6

FIG. 7

FIG. 8

FIG. 9

FIG. 10

FIG. 11

4

FIG. 12

FIG. 13